Europäisches Patentamt

European Patent Office

Office européen des brevets

(19)

(11) **EP 1 705 214 A1**

(12) **EUROPEAN PATENT APPLICATION**

(43) Date of publication:
**27.09.2006 Bulletin 2006/39**

(21) Application number: **05075685.7**

(22) Date of filing: **23.03.2005**

(51) Int Cl.:
*C08K 5/07* (2006.01)          *C08L 67/06* (2006.01)
*C08L 63/10* (2006.01)          *C08F 290/06* (2006.01)
*C08F 290/14* (2006.01)          *C08F 283/01* (2006.01)
*C08F 4/40* (2006.01)

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **DSM IP Assets B.V.
6411 TE  Heerlen (NL)**

(72) Inventors:
• **Jansen, Johan Franz Gradus Antonius
6165 AP Geleen (NL)**

• **Kleuskens, Engelina Catharina
6181 AK Elsloo (NL)**
• **Kraeger, Ivo Ronald
3742 PJ Baarn (NL)**

(74) Representative: **Verhaegen, Ilse Maria M.
DSM Intellectual Property
Office Geleen
P.O. Box 9
6160 MA  Geleen (NL)**

(54) **Gel time drift-free resin compositions**

(57)    The present invention relates to unsaturated polyester resin or vinyl ester resin compositions that are essentially free of cobalt; that are curable with a peroxide component; and that, comprise - while being cured - a polymer containing reactive unsaturations, optionally a reactive diluent, and a dioxo-component; which dioxo-component consists of one or more dioxo-compounds having a calculated reduction energy (CRE), being the energy difference in kcal/mole between the lowest energy conformations of the radical anion and the corresponding neutral molecule as calculated by means of the Turbomole Version 5 program, in the range of from -5 to - 30 kcal/mole. These resin compositions show a reduced gel-time drift tendency.

The present invention further also relates to objects and structural parts prepared from such unsaturated polyester or vinyl ester resin compositions by curing with a peroxide. The present invention finally also relates to methods of peroxide curing of unsaturated polyester resin or vinyl ester resin compositions.

**EP 1 705 214 A1**

**Description**

The present invention relates to unsaturated polyester resin or vinyl ester resin compositions that are curable with a peroxide component, comprise - while being cured - a polymer containing reactive unsaturations, optionally a reactive diluent, and a dioxo-component; and that are showing a reduced gel-time drift tendency. Such resin compositions are so-called pre-accelerated resin compositions, if the dioxo-component is already present in the resin composition before the addition of the peroxide. In case the dioxo-component is added for the curing together with or after the addition of the peroxide, then the resin compositions are called accelerated resin compositions.

The present invention further also relates to objects and structural parts prepared from such unsaturated polyester or vinyl ester resin compositions by curing with a peroxide. The present invention finally also relates to methods of peroxide curing of unsaturated polyester resin or vinyl ester resin compositions.

As meant herein, objects and structural parts are considered to have a thickness of at least 0,5 mm and appropriate mechanical properties. The term "objects and structural parts" as meant herein also includes cured resin compositions as are used in the field of chemical anchoring, construction, roofing, flooring, windmill blades, containers, tanks, pipes, automotive parts, boats, etc.

As meant herein the term gel-time drift (for a specifically selected period of time, for instance 30 or 60 days) reflects the phenomenon, that - when curing is performed at another point of time than at the reference standard moment for curing, for instance 24 hours after preparation of the resin — the gel time observed is different from that at the point of reference. For unsaturated polyester resins and vinyl ester resins, as can generally be cured under the influence of peroxides, gel time represents the time lapsed in the curing phase of the resin to increase in temperature from 25 °C to 35 °C. Normally this corresponds to the time the fluidity (or viscosity) of the resin is still in a range where the resin can be handled easily. In closed mould operations, for instance, this time period is very important to be known. The lower the gel-time drift is, the better predictable the behavior of the resin (and the resulting properties of the cured material) will be.

W. D. Cook et al. in Polym. Int. Vol.50, 2001, at pages 129-134 describe in an interesting article various aspects of control of gel time and exotherm behavior during cure of unsaturated polyester resins. They also demonstrate how the exotherm behavior during cure of such resins can be followed. Figures 2 and 3 of this article show the gel times in the bottom parts of the exotherms measured. Because these authors focus on the exotherms as a whole, they also introduced some correction of the exotherms for heat loss. As can be seen from the figures, however, such correction for heat loss is not relevant for gel times below 100 minutes.

Gel time drift (hereinafter: "Gtd") can be expressed in a formula as follows:

$$\text{Gtd} = (T_{25\rightarrow35°C \text{ at x-days}} - T_{25\text{-}35°C \text{ after mixing}}) / T_{25\rightarrow35°C \text{ after mixing}} \times 100\% \qquad \text{(formula 1)}$$

In this formula $T_{25\rightarrow35°C}$ (which also might be represented by $T_{gel}$) represents, as mentioned above, the time lapsed in the curing phase of the resin to increase in temperature from 25 °C to 35 °C. The additional reference to "at x days" shows after how many days of preparing the resin the curing is effected.

All polyester resins, by their nature, undergo some changes over time from their production till their actual curing. One of the characteristics where such changes become visible is the gel-time drift. The state of the art unsaturated polyester or vinyl ester resin systems generally are being cured by means of initiation systems. In general, such unsaturated polyester or vinyl ester resin systems are cured under the influence of peroxides and are accelerated (often even pre-accelerated) by the presence of metal compounds, especially cobalt salts, as accelerators. Cobalt naphthenate and cobalt octanoate are the most widely used accelerators. In addition to accelerators, the polyester resins usually also contain inhibitors for ensuring that the resin systems do not gellify prematurely (i.e. that they have a good storage stability). Furthermore, inhibitors are being used to ensure that the resin systems have an appropriate gel time and/or for adjusting the gel-time value of the resin system to an even more suitable value.

Most commonly, in the state of the art, polymerization initiation of unsaturated polyester resins, etc. by redox reactions involving peroxides, is accelerated or pre-accelerated by a cobalt compound in combination with another accelerator. Reference, for instance, can be made to US-A-3,584,076, wherein dioxo-compounds chosen from the group of enolisable ketones are used as co-accelerators. Although this reference, in only one of its Examples, also discloses curing of a cobalt containing resin in the presence of a vicinal diketone (namely 2,3-butanedione, hereinafter also simply referred to as butanedione), there is no indication in this reference, that acceleration can also be achieved with butanedione in the absence of cobalt.

In this context it is to be noted, that Kolczynski et al. have shown interesting results in the proceedings of the 24th Annual Technical Conference SPI (The Society of the Plastics Industry, Inc.), 1969, Reinforced Plastics/Composites Division, at Section 16-A pages 1-8. Namely, it can be seen from table 2 at page 5 of Section A-16, that curing in the presence of cobalt and 2,4-pentanedione is much (i.e. about 10 times) faster than in the presence of cobalt and 2,3-pentanedione. 2,4-Pentanedione is also known as acetylacetone. It is also to be noted that this reference does not give any indication as to effect on gel-time drift.

It is further to be noted, that there are some vicinal diketones that are often used in photo-curing applications. The mechanism in photo-curing, however, is completely different from that in peroxide curing. Experience in photo-curing cannot be used for the decomposition of peroxides as in peroxide curing.

An excellent review article of M. Malik et al. in J.M.S. - Rev. Macromol. Chem. Phys., C40(2&3), p.139-165 (2000) gives a good overview of the current status of resin systems. Curing is addressed in chapter 9. For discussion of control of gel time reference can be made to the article of Cook *et al.* as has been mentioned above. Said article, however, does not present any hint as to the problems of gel-time drift as are being solved according to the present invention.

The phenomenon of gel-time drift, indeed, so far got quite little attention in the literature. Most attention so far has been given in literature to aspects of acceleration of gel time in general, and to improving of pot-life or shelf life of resins. The latter aspects, however, are not necessarily correlated to aspects of gel-time drift, and so, the literature until now gives very little suggestions as to possible solutions for improvement of (i.e. lowering of) gel-time drift. For instance, reference can be made to a paper presented by M. Belford et al., at the Fire Retardant Chemicals Association Spring Conference, March 10-13, 2002 where the gel-time reducing effect of a new antimony pentoxide dispersion (NYACOL APE 3040) has been addressed in fire retardant polyester resins promoted with cobalt.

Accordingly, for the unsaturated polyester resins and vinyl ester resins as are part of the current state of the art there is still need for finding resin systems showing reduced gel-time drift, or in other words, resin systems having only slight gel-time drift when cured with a peroxide. Preferably the mechanical properties of the resin composition after curing with a peroxide are unaffected (or improved) as a result of the changes in the resin composition for achieving the reduced gel-time drift.

The present inventors now, surprisingly, have provided an unsaturated polyester resin or vinyl ester resin composition

a) comprising - while being cured - a polymer containing reactive unsaturations, optionally a reactive diluent; and a dioxo-component; and
b) being curable with a peroxide component;
wherein
c) the resin composition is essentially free of cobalt; and
d) the dioxo-component consists of one or more dioxo-compounds having a calculated reduction energy (CRE), being the energy difference in kcal/mole between the lowest energy conformations of the radical anion and the corresponding neutral molecule as calculated by means of the Turbomole Version 5 program, in the range of from -5 to -30 kcal/mole.

The resin compositions according to the invention - while being cured - are, although being essentially free of cobalt, nevertheless and most surprisingly accelerated (and, in case the dioxo-component is added before the addition of the peroxide: pre-accelerated) by the presence of a dioxo-component having a CRE in the said range of from -5 to -30 kcal/mole. The term "essentially free of cobalt" as meant herein indicates that the content of cobalt is lower than about 0,015 mmol/kg, preferably even lower than about 0,005 mmol/kg, of the basic resin system (as is being defined hereinbelow), and most preferably the basic resin system is completely free of cobalt.

According to the present invention the aforementioned problems of the prior art have been overcome and resin compositions having reduced gel-time drift are obtained.

The polymer containing reactive unsaturations as is comprised in the unsaturated polyester resin or vinyl ester resin compositions according to the present invention, may suitably be selected from the unsaturated polyester resins or vinyl ester resins as are known to the skilled man. Examples of suitable unsaturated polyester or vinyl ester resins to be used as basic resin systems in the resins of the present invention are, subdivided in the categories as classified by Malik et al., cited above.

(1) Ortho-resins: these are based on phthalic anhydride, maleic anhydride, or fumaric acid and glycols, such as 1,2-propylene glycol, ethylene glycol, diethylene glycol, triethylene glycol, 1,3-propylene glycol, dipropylene glycol, tripropylene glycol, neopentyl glycol or hydrogenated bisphenol-A. Commonly the ones derived from 1,2-propylene glycol are used in combination with a reactive diluent such as styrene.
(2) Iso-resins: these are prepared from isophthalic acid, maleic anhydride or fumaric acid, and glycols. These resins may contain higher proportions of reactive diluent than the ortho resins.
(3) Bisphenol-A-fumarates: these are based on ethoxylated bisphenol-A and fumaric acid.
(4) Chlorendics: are resins prepared from chlorine/bromine containing anhydrides or phenols in the preparation of the UP resins.

(5) Vinyl ester resins: these are resins, which are mostly used because of their because of their hydrolytic resistance and excellent mechanical properties, as well as for their low styrene emission, are having unsaturated sites only in the terminal position, introduced by reaction of epoxy resins (e.g. diglycidyl ether of bisphenol-A, epoxies of the phenol-novolac type, or epoxies based on tetrabromobisphenol-A) with (meth)acrylic acid. Instead of (meth)acrylic acid also (meth)acrylamide may be used.

Besides these classes of resins also so-called dicyclopentadiene (DCPD) resins can be distinguished.

All of these resins, as can suitably used in the context of the present invention, may be modified according to methods known to the skilled man, e.g. for achieving lower acid number, hydroxyl number or anhydride number, or for becoming more flexible due to insertion of flexible units in the backbone, etc. The class of DCPD-resins is obtained either by modification of any of the above resin types by Diels-Alder reaction with cyclopentadiene, or they are obtained alternatively by first reacting maleic acid with dicyclopentadiene, followed by the resin manufacture as shown above.

Of course, also other reactive groups curable by reaction with peroxides may be present in the resins, for instance reactive groups derived from itaconic acid, citraconic acid and allylic groups, etc. Accordingly, the - basic - unsaturated polyester resins used in the present invention may contain solvents. The solvents may be inert to the - basic - resin system or may be reactive therewith during the curing step. Reactive solvents are particularly preferred. Examples of suitable reactive solvents are styrene, $\alpha$-methylstyrene, (meth) acrylates, N-vinylpyrrolidone and N-vinylcaprolactam. Preferably the - basic - unsaturated polyester resins contain at least 5 wt.% of a reactive solvent.

The unsaturated polyester resins and vinyl ester resins as are being used in the context of the present invention may be any type of such resins, but preferably are chosen from the group of DCPD-resins, iso-phthalic resins, ortho-phthalic resins and vinyl ester resins. More detailed examples of resins belonging to such groups of resins have been shown in the foregoing part of the specification.

These resins all can be cured by means of peroxide curing. According to the present invention, in addition to the peroxide specific dioxo-components are applied as accelerator, but also other (co-)accelerators can be applied. The peroxides used for the initiation can be any peroxide known to the skilled man for being used in curing of unsaturated polyester resins and vinyl ester resins. Such peroxides include organic and inorganic peroxides, whether solid or liquid; also hydrogen peroxide may be applied. Examples of suitable peroxides are, for instance, peroxy carbonates (of the formula -OC(O)O-), peroxyesters (of the formula -C(O)OO-), diacylperoxides (of the formula -C(O)OOC(O)-), dialkylperoxides (of the formula -OO-), etc. They can also be oligomeric or polymeric in nature. An extensive series of examples of suitable peroxides can be found, for instance, in US 2002/0091214-A1, paragraph [0018]. The skilled man can easily obtain information about the peroxides and the precautions to be taken in handling the peroxides in the instructions as given by the peroxide producers.

Preferably, the peroxide is chosen from the group of organic peroxides. Examples of suitable organic peroxides are: tertiary alkyl hydroperoxides (such as, for instance, t-butyl hydroperoxide), other hydroperoxides (such as, for instance, cumene hydroperoxide), the special class of hydroperoxides formed by the group of ketone peroxides (such as, for instance, methyl ethyl ketone peroxide and acetylacetone peroxide), peroxyesters or peracids (such as, for instance, t-butyl peresters, benzoyl peroxide, peracetates and perbenzoates, lauryl peroxide, including (di)peroxyesters), perethers (such as, for instance, peroxy diethyl ether). Often the organic peroxides used as curing agent are tertiary peresters or tertiary hydroperoxides, i.e. peroxy compounds having tertiary carbon atoms directly united to an -OO-acyl or -OOH group. Clearly also mixtures of these peroxides with other peroxides may be used in the context of the present invention. The peroxides may also be mixed peroxides, i.e. peroxides containing any two of different peroxygen-bearing moieties in one molecule). In case a solid peroxide is being used for the curing, the peroxide is preferably benzoyl peroxide (BPO).

Most preferably, however, the peroxide is a liquid hydroperoxide. The liquid hydroperoxide, of course, also may be a mixture of hydroperoxides. Handling of liquid hydroperoxides when curing the resins for their final use is generally easier: they have better mixing properties and dissolve more quickly in the resin to be cured.

In particular it is preferred that the peroxide is selected from the group of ketone peroxides, a special class of hydroperoxides. The peroxide being most preferred in terms of handling properties and economics is methyl ethyl ketone peroxide (MEK peroxide).

The dioxo-component in the resin compositions according to the invention consists of one or more dioxo-compounds having a calculated reduction energy (CRE), being the energy difference in kcal/mole between the lowest energy conformations of the radical anion and the corresponding neutral molecule as calculated by means of the Turbomole Version 5 program, in the range of from -5 to-30 kcal/mole. A detailed description of the assessment of CRE-values for different dioxo-compounds is presented hereinbelow in the experimental part.

Many dioxo-compounds are falling within the said range of CRE-values. Suitable examples of such dioxo-compounds are the ones shown in table 1 of the experimental part, namely, for instance, pyruvic aldehyde, camphorquinone, 2,3-hexanedione, 3,4-hexanedione, 2,3-pentanedione, and butanedione, but many other dioxo-compounds will have CRE-values in the said range. Other dioxo-compounds, for instance 3,5-di-*t*-butyl-1,2-benzoquinone, benzil, oxalic acid, diethyl oxalate, acetylacetone, methylacetoacetate and dimethylacetoacetamide, have CRE-values well outside the said range. For instance, acetylacetone, a substance often used in combination with cobalt for achieving curing according to the state of the art (e.g. see the Kolczynski *et al.* reference cited above) has a CRE-value of +4,16 kcal/mole.

Preferably, the dioxo-component comprises at least one vicinal dioxo-compound having a CRE in the range of from -5 to -30 kcal/mole

The above presented list of dioxo-compounds having a CRE in the range of from -5 to -30 kcal/mole, is at the same time a list of examples of suitable vicinal dioxo-compounds to be used in the present invention.

Taking into account that curing in the presence of cobalt and 2,4-pentanedione, as mentioned above, is much faster than in the presence of cobalt and 2,3-pentanedione, it is really very surprising that such excellent results are being achieved with vicinal dioxo-compounds without the presence of cobalt.

More preferably, the one or more vicinal dioxo-compounds used in the resin compositions according to the invention preferably each have a calculated reduction energy (CRE) between -10 and -20 kcal/mole, and even more preferably between -13 and -17 kcal/mole. Accordingly, from the above list of dioxo-compounds, 2,3-hexanedione, 3,4-hexanedione, 2,3-pentanedione and butanedione are most preferred.

Advantageously, in the resin compositions according to the invention, at least one of the oxo-groups in the one or more vicinal dioxo-compounds is a ketone group.

More preferably at least one of the vicinal dioxo-compounds in the resin compositions according to the invention is a vicinal diketone.

It is especially advantageous if, in the resin compositions according to the invention, at least one of the ketone groups is a methyl ketone. The methyl ketones provide best results as to gel-time drift improvement.

Accordingly, from the above list of dioxo-compounds, 2,3-hexanedione, 2,3-pentanedione and butanedione are most preferred.

The amount of vicinal dioxo-compound(s) in the resin compositions according to the invention is not very critical and may vary between wide ranges.

For understanding of the invention, and for proper assessment of the amounts of dioxo-component and/or other components of the unsaturated polyester resin or vinyl ester resin compositions according to the invention, the term "basic resin system" is introduced here. As used herein, the term "basic resin system" is understood to mean the total weight of the resin, but excluding any fillers as may be used when applying the resin system for its intended uses. The basic resin system therefore consists of the polymer containing reactive unsaturations, and any reactive diluent and any additives present therein (i.e. except for the peroxide component that is to be added shortly before the curing) for making it suitable for being cured, for instance all kinds of compounds soluble in the resin, such as initiators, accelerators, inhibitors, colorants (dyes), release agents etc., as well as styrene and/or other solvents as may usually be present therein. The amount of additives soluble in the resin usually may be as from 1 to 25 wt.% of the basic resin system; the amount of styrene and/or other solvent may be as large as, for instance, up to 75 wt.% of the basic resin system. The basic resin system, however, explicitly does not include compounds not being soluble therein, such as fillers (e.g. glass or carbon fibers), talc, clay, solid pigments (such as, for instance, titanium dioxide (titanium white)), low-profile agents, thixotropic agents, flame retardants, e.g. aluminium hydrates (e.g. aluminium trihydrate, $Al(OH)_3$), etc.

Preferably, however, the amount of the one or more vicinal dioxo-compounds is between 0,001 and 10 % by weight, calculated on the total weight of the basic resin system of the resin composition, which total weight is determined excluding fillers and the like.

Calculating the total weight of the basic resin system of a resin composition while excluding the weight of fillers, low-profile agents, thixotropic agents, enforcement materials, etc. which do not form part of the resin composition (i.e. in the present case the polymer containing reactive unsaturations, the optionally present reactive diluent and the vicinal dioxo-compound(s)) is standard practice in the field of unsaturated polyester and vinyl ester resins.

More preferably, this amount of the one or more vicinal dioxo-compounds is between 0,01 and 5 % by weight, and most preferably it is between 0,1 and 3 % by weight.

In a particularly preferred embodiment of the present invention, the resin composition has an acid value in the range of from 0-300 mg KOH/g of resin and wherein the molecular weight of the polymer containing reactive unsaturations is in the range of from 500 to 200.000 g/mole. Advantageously, the molecular weight of the polymer containing reactive unsaturations is in the range of from 750 to 75.000 g/mole, and more preferably of from 1.000 to 10.000 g/mole.

In even more preferred embodiments of the invention, the resin composition according to the invention also contains one or more reactive diluents. Such reactive diluents are especially relevant for reducing the viscosity of the resin in order to improve the resin handling properties, particularly for being used in techniques like vacuum injection, etc. However, the amount of such reactive diluent in the resin composition according to the invention is not critical. Preferably, the reactive diluent is a methacrylate and/or styrene.

In a further preferred embodiment of the present invention, the resin composition also contains one or more inhibitors.

More preferably, the resin compositions according to the invention contain one or more inhibitors selected from the groups of phenolic and/or N-oxyl based inhibitors.

The amount of inhibitor, preferably phenolic and/or N-oxyl based inhibitor, as used in the context of the present invention, may, however, vary within rather wide ranges, and may be chosen as a first indication of the gel time as is desired to be achieved. Preferably, the amount of phenolic inhibitor is from about 0,001 to 35 mmol per kg of basic resin system, and more preferably it amounts to more than 0,01, most preferably more than 0,1 mmol per kg of basic resin system. The skilled man quite easily can assess, in dependence of the type of inhibitor selected, which amount thereof leads to good results according to the invention.

Preferably the inhibitors are selected from the groups of: (i) phenolic inhibitors; (ii) N-oxyl based inhibitors; (iii) phenothiazine inhibitors; or (iv) any combination of phenolic and/or N-oxyl based and/or phenothiazine inhibitors.

Suitable examples of inhibitors that can be used in the resin compositions according to the invention are, for instance, 2-methoxyphenol, 4-methoxyphenol, 2,6-di-t-butyl-4-methylphenol, 2,6-di-t-butylphenol, 2,4,6-trimethylphenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone , 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), aluminium-N-nitrosophenyl hydroxylamine, diethylhydroxylamine, phenothiazine and/or derivatives or combinations of any of these compounds.

Advantageously, the amount of inhibitor in the resin composition according to the invention is in the range of from 0,0001 to 10 % by weight, calculated on the total weight of the basic resin system of the resin composition, which total weight is determined excluding fillers and the like. More preferably, the amount of inhibitor in the resin composition is in the range of from 0,001 to 1 % by weight.

The resin composition according to the invention preferably is curable with a liquid or dissolved peroxide component. Most preferably, the peroxide is a liquid or dissolved hydroperoxide.

The present invention also relates to cured objects obtained from a resin composition according to the invention by curing with a peroxide.

Moreover, the present invention also relates to a method for curing, in the presence of a dioxo-component, of unsaturated polyester resin or vinyl ester resin compositions comprising a polymer containing reactive unsaturations, optionally a reactive diluent; and; and being curable with a peroxide component;
wherein the resin composition is essentially free of cobalt; and wherein the dioxo-component is added to the resin composition before or after the addition of the peroxide component, and the dioxo-component consists of one or more dioxo-compounds having a calculated reduction energy (CRE), being the energy difference in kcal/mole between the lowest energy conformations of the radical anion and the corresponding neutral molecule as calculated by means of the Turbomole Version 5 program, in the range of from -5 to -30 kcal/mole.

If the dioxo-component is added to the resin composition as an accelerator for the curing after the peroxide has been added thereto for curing, the skilled man in peroxide curing of resin compositions can easily assess within which period of time, or at which moment after the addition of the peroxide, the dioxo-component is most advantageously added. If said period would be too long (i.e. more than 10 to 20 hours), than increase in viscosity of the resin composition and/or gelation thereof will occur. Handling of the resin composition then becomes unnecessarily difficult.

Preferably, in such method for curing, the dioxo-component is present in the resin composition before the peroxide is being added for curing.

Preferred embodiments of these methods for curing have the narrower characteristics of the dioxo-component, resin composition and amount of dioxo-component as can be found in the abovementioned paragraphs dealing with the resin compositions.

The invention is now further illustrated in the following experimental part, by means of Examples and Comparative Examples, without being restricted to the specific Examples shown.

EXPERIMENTAL PART

Calculated Reduction Energy (CRE)

For each vicinal dioxo-compound, for which the Calculated Reduction Energy needs to be assessed, the following procedure is to be followed:

In a first step, for any of such vicinal dioxo-compounds, the neutral molecule and its corresponding radical anion are constructed by means of the builder facilities of the Spartan Pro package (version 1.03; January 2000) from Wavefunction Inc. (18401 Von Karman Ave., Suite 370, Irvine, CA 92612, United States of America).

The package used in said first step, then subsequently is used for performing initial geometry optimizations and conformational analyses at the so-called AM1 level.

Next, for each vicinal dioxo-compound studied, except for the AM1 structures containing internal hydrogen bonds, all AM1 structures having a relative energy of 0 - about 4 kcal/mole with respect to the AM1 global minimum, are used as input for carrying out density functional calculations by means of the Turbomole program (Turbomole Version 5, January 2002 from the Theoretical Chemistry Group of the University of Karlsruhe, Germany, as developed by R. Ahlrichs *et al.*). These Density Functional Turbomole (DFT) optimizations are performed with the Becke Perdew86 functional "BP86" as is described in the combined papers of A. Becke (Phys. Rev. A, 1988, 38, p.3098-3100) and J. Perdew (Phys. Rev. B, 1986, 33, p.8822-3824), in combination with the standard SV(P) basis set (as described by A. Schäfer et al., J. Chem. Phys., 1992, 97, p.2571-2577) and the so-called RI (Resolution of Identity) algorithm (as described by K. Eichkorn et al., Theor. Chem. Acc. 1997, 97, p.119-124) employing default convergence criteria of $10^{-6}$ a.u. (atomic units) for the maximum energy change and of $10^{-3}$ a.u. for the maximum gradient. Accordingly, all calculations relating to the radical anions, involve the unrestricted open-shell spin wavefunctions. The BP86/SV(P) method used here, in combination with the RI algorithm in the Turbomole program, is unambiguously defined for the skilled user of the Turbomole program.

From the BP86/SV(P) global minima so obtained, subsequently the electron affinity (EA) is determined for each of individual dioxo-compound X studied, by means of formula (2):

$$EA(X) \text{ (kcal/mole)} = (E_{total}(\text{radical anion of X}) - E_{total}(X))*627.51 \qquad \text{formula (2)}$$

with $E_{total}$ denoting the BP86/SV(P) global minima total energies in a.u., respectively for the radical anion and for the neutral molecule of the vicinal dioxo-compound X.

The electron affinity so determined is, in the context of the present application, referred to as Calculated Reduction Energy (CRE), in kcal/mole.

Most of the resins as used for curing tests in the experimental part hereof are commercially available products, as indicated in the Examples and Comparative Examples. In addition thereto, also an ortho-resin (which hereinafter will be referred to as Resin A) was specifically prepared on behalf of the inventors for being used in the tests. Resin A was made as follows:

Preparation of Resin A

184,8 g of propylene glycol (PG), 135,8 g of diethylene glycol (DEG), 216,1 g of phthalic anhydride (PAN), 172,8 g of maleic anhydride (MAN), and standard inhibitors were charged in a vessel equipped with a reflux condenser, a temperature measurement device and inert gas inlet. The mixture was heated slowly by usual methods to 205 °C. At 205 °C the mixture was kept under reduced pressure until the acid value reached a value below 16 mg KOH/g resin and the falling ball viscosity at 100 °C was below 50 dPa.s. Then the vacuum was relieved with inert gas, and the mixture was cooled down to 130 °C, and thereafter the solid UP resin so obtained was transferred to a mixture of 355 g of styrene and 0,07 g of mono-t-butyl-hydroquinone and was dissolved at a temperature below 80 °C. The final resin viscosity reached at 23 °C was 640 mPa.s, and the Non Volatile Matter content was 64,5 wt.%.

In the following Examples and Comparative Examples amounts of the components are being indicated either in weight units, or in weight percentages, respectively in mmol. The percentages and mmol values at each occurrence should be read as having been calculated per kg of resin in the so-called "basic resin system".

Monitoring of curing

In most of the Examples and Comparative Examples presented hereinafter it is mentioned, that curing was monitored by means of standard gel time equipment. This is intended to mean that both the gel time ($T_{gel}$ or $T_{25->35°C}$) and peak time ($T_{peak}$ or $T_{25->peak}$) were determined by exotherm measurements according to the method of DIN 16945 when curing the resin with the peroxides as indicated in the Examples and Comparative Examples. The equipment used therefor was a Soform gel timer, with a Peakpro software package and National Instruments hardware; the waterbath and thermostat used were respectively Haake W26, and Haake DL30.

For some of the Examples and Comparative Examples also the gel-time drift (Gtd) was calculated. This was done on the basis of the gel times determined at different dates of curing according to formula 1:

$$Gtd = (T_{25 \to 35°C \text{ at y-days}} - T_{25 \to 35°C \text{ after mixing}}) / T_{25 \to 35°C \text{ after mixing}} \times 100\% \qquad \text{(formula 1)}$$

with "y" indicating the number of days after mixing.

Example 1 and Comparative Example A

90 g of resin A was mixed with 10 g styrene, followed by addition of 1 wt.% of dioxo-compound as indicated in table 1 below. After stirring for about 5 min, 3 g of peroxide (Butanox M50; a methyl ethyl ketone peroxide solution of Akzo Nobel, the Netherlands) was added and the resin was allowed to cure. Effect of curing was evaluated qualitatively by assessing whether a solid resin material was obtained after 24 hr, or whether the resin still remained liquid after 24 hr, as shown in Table 1.

Table 1

| Ex. or Comp. Ex. | Dioxo-compound | | Curing tests performed (see text of Ex.1) | | |
| | All compounds were tested when used in Resin A at 1 wt% | calculated reduction energy (CRE) kcal/mole | (i) curing with peroxide only | (ii) curing with peroxide and 1% of acetic acid | (iii) curing with peroxide and 6 mmol of KOH/kg resin |
|---|---|---|---|---|---|
| A.1 | 3,5-di-*t*-butyl-1,2-benzoquinone | -43,09 | - | - | - |
| A.2 | benzil | -34,83 | - | - | - |
| 1.1 | pyruvic aldehyde | -17,41 | + | + | + |
| 1.2 | camphorquinone | -17,32 | + | + | + |
| 1.3 | 2,3-hexanedione | -15,67 | + | + | + |
| 1.4 | 3,4-hexanedione | -14,90 | + | + | + |
| 1.5 | 2,3-pentanedione | -14,01 | + | + | + |
| 1.6 | 2,3-butanedione | -13,15 | + | + | + |
| A.3 | oxalic acid | -2,92 | - | - | - |
| A.4 | diethyl oxalate | -2,67 | - | - | - |
| A.5 | acetylacetone | +4,16 | - | - | - |
| A.6 | methylacetoacetate | +12,91 | - | - | - |
| A.7 | N,N-dimethylacetoacetamide | +14,90 | - | - | - |
| + means solid material obtained after 24hr, - means remains liquid after 24 hr | | | | | |

Example 2

90 g of resin A was mixed with 10 g of styrene, followed by addition of the amount of dioxo-compound (either 1 wt.%, or 116 mmol/kg, or at varying wt.%) as indicated in tables 2.1 - 2.3 below. After stirring for about 5 min, 3 g of peroxide (Butanox M50) was added and curing was monitored by means of standard gel time equipment as described above. The results are shown in table 2

Table 2.1

| Example | Dioxo-compound (1 wt.%) | $T_{25 \to 35°C}$ (min) | $T_{25 \to \text{peak}}$ (min) | peak Temp (°C) |
|---|---|---|---|---|
| 2.1 | 2,3-butanedione | 31 | 39 | 187 |

(continued)

| Example | Dioxo-compound (1 wt.%) | $T_{25->35°C}$ (min) | $T_{25->peak}$ (min) | peak Temp (°C) |
|---|---|---|---|---|
| 2.2 | 2,3-pentanedione | 34 | 45 | 171 |
| 2.3 | 2,3-hexanedione | 42 | 64 | 100 |
| 2.4 | 3,4-hexanedione | 55 | 79 | 88 |
| 2.5 | 2,3-heptanedione | 54 | 78 | 62 |

Table 2.2

| Example | Dioxo-compound (116 mmol/kg) | $T_{25->35°C}$ (min) | $T_{25->peak}$ (min) | peak Temp (°C) |
|---|---|---|---|---|
| 2.6 | 2,3-butanedione | 31 | 39 | 187 |
| 2.7 | 2,3-pentanedione | 31 | 40 | 180 |
| 2.8 | 2,3-hexanedione | 35 | 52 | 142 |
| 2.9 | 3,4-hexanedione | 45 | 65 | 129 |
| 2.10 | 2,3-heptanedione | 40 | 61 | 118 |

Table 2.3

| Example | 2,3-butanedione (wt.%) | $T_{25->35°C}$ (min) | $T_{25->peak}$ (min) | peak Temp (°C) |
|---|---|---|---|---|
| 2.11 | 0,25 | 82 | 106 | 56 |
| 2.12 | 0,5 | 48 | 64 | 147 |
| 2.13 (=2.1) | 1 | 31 | 39 | 187 |
| 2.14 | 2,5 | 17 | 22 | 196 |
| 2.15 | 5 | 12 | 16 | 191 |

The experiments of Examples 2.1-2.10 show that methyl ketones are preferred as dioxo-compounds. The experiments of Examples 2.11-2.15 clearly demonstrate that the gel time can be adjusted easily by varying the amount of dioxo-component in the composition.

Example 3

Most of the peroxides used in this Example (Butanox M50, Butanox LPT, Trigonox 44B and Trigonox 239) are available from Akzo Nobel, the Netherlands.

Example 3.1a

90 g of resin A was mixed with 10 g styrene, followed by addition of 1 g of butanedione. After stirring for about 5 min, 3 g of peroxide (as indicated in table 3.1 a) was added and curing was monitored by means of standard gel time equipment as described above. The results are shown in table 3.1a.

Table 3.1a (butanedione)

| Example | peroxide (3g) | $T_{25->35°C}$ (min) | $T_{25->peak}$ (min) | peak Temp (°C) |
|---|---|---|---|---|
| 3.1a | $H_2O_2$(30%) | 173 | 218 | 54 |
| 3.1b | Butanox M50 | 31 | 39 | 187 |
| 3.1c | Trigonox 44B | 242 | 276 | 133 |

The results show that gel time and other gelation properties can be tuned within wide ranges by proper choice of peroxide.

Example 3.1 b

90 g of resin A was mixed with 10 g styrene, followed by addition of 6 mmol/kg potassium octanoate, 0,5 mmol/kg t-butylcatechol and 1 g of butanedione. After stirring for about 5 min, 3 g of peroxide (as indicated in table 3.1b) was added and curing was monitored by means of standard gel time equipment as described above. The results are shown in table 3.1b.

Table 3.1b

| Example | peroxide (3 g) | $T_{25->35°C}$ (min) | $T_{25->peak}$ (min) | peak Temp (°C) |
|---------|----------------|----------------------|----------------------|----------------|
| 3.1d | $H_2O_2$(30%) | 3,2 | 6,2 | 191 |
| 3.1e | Butanox M50 | 3,7 | 6,2 | 205 |
| 3.1f | Trigonox 44B | 6,8 | 9,9 | 183 |
| 3.1g | Trigonox AW70 | 81,5 | 91,2 | 177 |
| 3.1h | Trigonox 239 | 49,4 | 55,8 | 177 |
| 3.1i | Cyclonox LE-50 | 2,7 | 5,1 | 193 |

Most of the peroxides used in this Example 3.1 (Butanox M50, Trigonox 44B, Trigonox AW70, Trigonox 239 and Cyclonox LE-50) are available from Akzo Nobel, the Netherlands.

These results, together, show that gel time and other gelation properties can be tuned within wide ranges by proper choice of peroxide, and that the resins can be cured with a broad range of peroxides and in varying amounts thereof, under varying conditions.

Example 3.2

90 g Palatal P4-01, an unsaturated polyester resin from the Palatal ester resins series commercially available from DSM Composite Resins, Schaffhausen, Switzerland) was mixed with 10 g of styrene and with 0,5 g of 2,3-hexanedione. After stirring for about 5 min, 2 g of peroxide (as indicated in table 3.2a) was added and curing was monitored by means of standard gel time equipment as described above. The results are shown in table 3.2a.

Table 3.2a (2,3-hexanedione)

| Example | peroxide (3 g) | $T_{25->35°C}$ (min) | $T_{25->peak}$ (min) | peak Temp (°C) |
|---------|----------------|----------------------|----------------------|----------------|
| 3.2a | Butanox M50 | 46,5 | 64 | 43 |
| 3.2b | Butanox LPT | 96 | 96 | 35 |
| 3.2c | Trigonox 239 | 219 | 219 | 35 |

Additionally, curing experiments according to the invention also were carried out with 1 wt.% of butanedione instead of the 2,3-hexanedione used above (at 3 wt.% of Butanox M50 for each experiment), for mutual comparison purposes, with some more resin types as are commercially available from DSM Composite Resins, Schaffhausen, Switzerland. The results are summarized in table 3.2b.

Of these resins all Palatal type resins are ortho-type unsaturated polyester resins (in styrene) and Synolite type resins are DCPD-type unsaturated polyester resins (in styrene); and Daron XP-45 is a methacrylate resin (in styrene). For these experiments, except for the Example using Diacryl 121 (a resin product obtainable from Akzo, the Netherlands; where no styrene was added), the weight ratio resin vs. styrene was in each case set at 90 : 10.

Table 3.2b (butanedione)

| Example | Resin | $T_{25->35°C}$ (min) | $T_{25->peak}$ (min) | peak Temp (°C) |
|---------|-------|----------------------|----------------------|----------------|
| 3.2d | Resin A | 31 | 39 | 187 |

(continued)

| Example | Resin | $T_{25->35°C}$ (min) | $T_{25->peak}$ (min) | peak Temp (°C) |
|---|---|---|---|---|
| 3.2e | Palatal P4-01 | 15 | 25 | 152 |
| 3.2f | Palatal P5-01 | 12 | 18 | 178 |
| 3.2g | Palatal P6-01 | 14 | 18 | 212 |
| 3.2h | Palatal P69-02 | 19 | 24 | 201 |
| 3.2i | Palatal A410-01 | 17 | 25 | 197 |
| 3.2j | Diacryl 121 | 58 | 63 | 103 |
| 3.2k | Synolite 5530-X-1 | 22 | 29 | 172 |
| 3.2l | Synolite 8388-N-1 | 14 | 23 | 163 |
| 3.2m | Daron XP-45-A-2 | 4 | 8 | 197 |

Examples 3.1 and 3.2 demonstrate that, according to the invention, various kinds of resins can be cured with a broad range of peroxides and in varying amounts thereof.

It is to be noticed, moreover, that for none of the Examples from the set of 3.2a to 3.2m foaming problems were observed when curing in the presence of a dioxo-compound according to the invention. On the other hand, in otherwise identical Comparative curing experiments, that are not shown here (but for convenience are correspondingly being referred to as Comparative Examples B.d, B.h, B.j, B.k, B.l and B.m, respectively) foam formation was observed, if - instead of the dioxo-compound - 3 mmol of cobalt per kg of resin was used as accelerator for the curing.

Example 3.3

To 90 g of resin A, respectively of Palatal P5-01, mixed with 10 g of styrene, was added 1 g of butanedione, followed by stirring for about 5 min. Then an amount of Butanox M50 was added, as indicated in Table 3.3, and curing was monitored by means of standard gel time equipment as described above. The results are shown in table 3.3.

Table 3.3

| Example | Resin | Butanox M50 (wt.%) | $T_{25->35°C}$ (min) | $T_{25->peak}$ (min) | peak Temp (°C) |
|---|---|---|---|---|---|
| 3.3a | A | 1 | 57 | 68 | 168 |
| 3.3b | A | 2 | 37 | 46 | 182 |
| 3.3c (=3.1b) | A | 3 | 31 | 39 | 187 |
| 3.3d | P5-01 | 1 | 23 | 33 | 153 |
| 3.3e | P5-01 | 2 | 15 | 23 | 173 |
| 3.3f | P5-01 | 3 | 12 | 19 | 183 |

These results clearly show, that gel time and other gelation properties can be tuned within wide ranges by proper choice of the amount of peroxide.

Example 4

Examples 4.1-4.14 (for Resin A) and 4.15-4.24 (for Palatal P5-01)

In each of the Examples 4.1-4.14 90 g of Resin A was mixed with 10 g of styrene, followed by 1 g of butanedione. After stirring for 5 min an amount of an alkaline component, as indicated in table 4.1, was added. After stirring for another 30 min, 3 g of Butanox M50 was added and the curing was monitored by means of standard gel time equipment as described above.

For the Examples 4.15-4.24 the procedure was the same, except for the fact that 90 g of Palatal P5-01 was used instead of Resin A.

The results of these Examples are shown in table 4.1.

Table 4.1

| Example | type of base added | amount of base (mmol/kg) | $T_{25->35°C}$ (min) | $T_{25->peak}$ (min) | peak Temp (°C) |
|---|---|---|---|---|---|
| Resin A | | | | | |
| 4.1 | none | 0 | 31 | 39 | 187 |
| 4.2 | KOH | 0,1 | 28 | 36 | 186 |
| 4.3 | KOH | 0,6 | 21 | 27 | 191 |
| 4.4 | KOH | 0,8 | 17 | 23 | 197 |
| 4.5 | KOH | 6 | 6 | 10 | 202 |
| 4.6 | KOH | 58 | 3 | 6 | 202 |
| 4.7 | KOH | 116 | 3 | 7 | 187 |
| 4.8 | NaOH | 58 | 4 | 7 | 202 |
| 4.9 | LiOH | 58 | 3 | 7 | 194 |
| 4.10 | $Bu_4NOH$ | 58 | 3 | 6 | 194 |
| 4.11 | MgO | 58 | 22,6 | 28 | 196 |
| 4.12 | $CaCO_3$ | 58 | 30 | 37 | 190 |
| 4.13 | $Al(OH)_3$ | 38,7 | 29 | 36 | 192 |
| 4.14 | $Al(OH)_3$ | 4.274 | 9 | 15,9 | 104 |
| | | | | | |
| Palatal P5-01 | | | | | |
| 4.15 | none | 0 | 12 | 18 | 178 |
| 4.16 | KOH | 0,1 | 11 | 18 | 181 |
| 4.17 | KOH | 0,6 | 10 | 17 | 182 |
| 4.18 | KOH | 0,8 | 10 | 16 | 181 |
| 4.19 | KOH | 6 | 9 | 15 | 181 |
| 4.20 | KOH | 58 | 3 | 7 | 180 |
| 4.21 | KOH | 116 | 2 | 6 | 176 |
| 4.22 | NaOH | 58 | 6 | 12 | 175 |
| 4.23 | LiOH | 58 | 4 | 8 | 174 |
| 4.24 | $Bu_4NOH$ | 58 | 3 | 8 | 172 |

It is particularly advantageous to use $Al(OH)_3$ because the materials so produced have excellent fire-retardant properties, especially at high loads like in Ex.4.14 in which equal amounts by weight of resin and $Al(OH)_3$ are being used.

Examples 4.25 and 4.26

The curing characteristics of resins containing a dioxo-component as accelerator can also be tuned by means of adding a salt. This is, for instance, shown in Examples 4.25 and 4.26 (in Table 4.2). Example 4.25 is shown for specifically demonstrating the effect of the salt added in Example 4.26.

In each of these Examples 4.25 and 4.26 each time 1 g of butanedione was added to 100 g of the Palatal P5-01 resin. Then, after stirring for about 5 min, an amount of water, respectively of an aqueous solution of $KBF_4$, as indicated in table 4.2, was added. After stirring for another 30 min, 3 g of Butanox M50 was added and the curing was monitored by means of standard gel time equipment as described above.

Table 4.2

| Example | resin | additionally added component | $T_{25->35°C}$ (min) | $T_{25->peak}$ (min) | peak Temp (°C) |
|---------|-------|------------------------------|------------------|------------------|----------------|
| 4.25 | Palatal P5-01 | 10 g of $H_2O$ | 33 | 50 | 93 |
| 4.26 | Palatal P5-01 | 0,6 mmol $KBF_4$ in 10g $H_2O$ | 19 | 32 | 100 |

Examples 4.27-4.37

To a mixture of 90 g of Resin A, 10 g of styrene and 1 g of butanedione an amount of an amine compound, as indicated in table 4.3, was added. After stirring for 5 min, the resin mixture was cured with 3 wt.% of Butanox M50 and curing was monitored by means of standard gel time equipment as described above. The following amines were tested: N,N-dimethylaniline (DMA), N,N-dimethyl toluidine (DMT); N,N-di-isopropanol-toluidine (DiPT); N,N-dimethyl ethanolamine (DMEA), and N-methyl diethanolamine (MDEA)

Table 4.3

| Example | amine used | | | $T_{25->35°C}$ (min) | $T_{25->peak}$ (min) | peak Temp (°C) |
|---------|------|-----------|--------------------------|------------------|------------------|----------------|
| | type | amount (g) | amount (mmol/kg resin) | | | |
| 4.27 | none | 0 | 0 | 31 | 39 | 187 |
| 4.28 | DMA | 0,067 | 5,5 | 23,9 | 29,3 | 194 |
| 4.29 | | 0,12 | 9,9 | 21,6 | 26,8 | 194 |
| 4.30 | DMT | 0,071 | 5,2 | 16,9 | 21,9 | 194 |
| 4.31 | | 0,134 | 9,9 | 13 | 17,5 | 197 |
| 4.32 | DiPT | 0,11 | 4,9 | 29 | 35,8 | 188 |
| 4.33 | | 0,227 | 10,2 | 26,7 | 33,4 | 190 |
| 4.34 | DMEA | 0,045 | 5,05 | 7 | 10,5 | 201 |
| 4.35 | | 0,087 | 9,8 | 4,6 | 7,7 | 203 |
| 4.36 | MDEA | 0,064 | 5,4 | 8,3 | 12,1 | 189 |
| 4.37 | | 0,128 | 10,7 | 6,2 | 9,6 | 196 |

These Examples clearly demonstrate that the gel time also can be adjusted via the addition of organic bases, for instance amines.

Example 5

In each of the Examples 5.1-5.3 270 g of a resin (as indicated in table 5) was mixed with 30 g of styrene, and 3 g of butanedione was added together with 0,5 mmol of t-butylcatechol per kg of resin. This sample was split into three equal portions. 3 g of Butanox M50 was added with stirring to one portion of the resin and curing was monitored by means of standard gel time equipment as described above. This was repeated after 36 days for another portion of the resin after it had been stored for 36 days at room temperature, approximately 25 °C. For the third portion the same procedure was repeated after 150 days. The gel-time drift over 36 days, resp. 150 days, then was determined according to formula 1, with y being 36 (resp. 150). The results are shown in Table 5. No differences were found in the results after 36 and 150 days.

Table 5

| Example | Resin used | $T_{25->35°C\ t=0}$ = after mixing | $T_{25->35°C}$ 36 days | $T_{25->35°C}$ 150 days | gel-time drift Gtd (in %) [both after 36 and after 150 days] |
|---------|-----------|-----------------------------------|------------------|-------------------|--------------------------------------------------------------|
| 5.1 | Resin A | 37 | 36 | 36 | -3 |

(continued)

| Example | Resin used | $T_{25\rightarrow35°C\ t=0}$ = after mixing | $T_{25\rightarrow35°C}$ 36 days | $T_{25\rightarrow35°C}$ 150 days | gel-time drift Gtd (in %) [both after 36 and after 150 days] |
|---|---|---|---|---|---|
| 5.2 | Palatal P4-01 | 16 | 17 | 17 | 6 |
| 5.3 | Palatal P5-01 | 14 | 14 | 14 | 0 |

It is to be noticed that the above type of resins, when being cobalt pre-accelerated, tend to show gel-time drift values in the order of magnitude of at least 35% after 36 days.

Example 6 and Comparative Example C

To 900 g of a resin (as indicated in table 6 below) mixed with 100 g of styrene, 10 g of butanedione (in all Examples, except in 6.2 and 6.6, where 20 g of butanedione was used for obtaining acceptable gel times), respectively 10 g of acetylacetone (in the Comparative Examples), was added with mixing. After stirring for about 5 min 1 mmol per kg of resin of t-butylcatechol was added, and subsequently a metal component (3 mmol of metal/kg of resin in the form of one of its salts: Ti-tetrabutoxide; Cu-, Fe- and V-naphthenate; Mn-ethylhexanoate; $ZnCl_2$) was added, as indicated in table 6, and stirring was continued for some minutes. After stirring for about 30 min, the resin then was split into portions of 100 g each. Then, to such 100 g portion, 3 g of Butanox M50 was added and curing was monitored by means of standard gel time equipment as described above. This was repeated after 36 days for another portion of 100 g of the resin after it had been stored for 36 days at room temperature, approximately 25 °C. The gel-time drift over 36 days then was determined according to formula 1, with y being 36. The results are shown in Table 6.

Table 6

| Example or Comparative Example | Resin used | Metal added | $T_{25\rightarrow35°C\ t=0}$ after mixing | $T_{25\rightarrow35°C}$ 36 days | gel-time drift Gtd (in %) |
|---|---|---|---|---|---|
| 6.1 | Palatal P69-02 | Ti | 33 | 29 | -12 |
| C.1 | | Ti | 30 | 23 | -23 |
| 6.2 | | Mn | 15,9 | 15,5 | 3 |
| C.2 | | Mn | 175 | 226 | 29 |
| 6.3 | | Fe | 15 | 18 | 20 |
| C.3 | | Fe | 237 | 370 | 56 |
| 6.4 | | V | 7 | 6 | -14 |
| C.4 | | V | 5 | Gel after 1 day | n.d. |
| 6.5 | Palatal P4-01 | Ti | 21 | 19 | -9,5 |
| C.5 | | Ti | 55 | 41 | -25,5 |
| 6.6 | | Mn | 10,5 | 10,8 | 2,9 |
| C.6 | | Mn | 188 | 220 | 17 |
| 6.7 | | Fe | 11 | 12 | 9,1 |
| C.7 | | Fe | 204 | 321 | 57 |

These Examples and Comparative Examples clearly demonstrate that use of dioxo-components according to the invention results in more stable curing characteristics as compared to use of other dioxo-components, like acetylacetone. Moreover, gel-time drift can be seen to be much lower for the Examples than for the Comparative Examples.

It is to be noticed that the above type of resins, when being cobalt pre-accelerated, tend to show even much higher gel-time drift values. For instance (and for further comparison) such Gtd for Palatal P4-01, pre-accelerated with cobalt and acetylacetone is in the order of magnitude of about 105%.

Example 7

To a mixture of 90 g of Resin A and 10 g of styrene first 3 g of Butanox M50 was added and then the mixture was stirred for 1 min. Subsequently, at a predetermined point of time (5 min; 8 hours; or 24 hours) an amount of 1 g of butanedione was added, and then the mixture stirred for 30 sec and and curing was monitored by means of standard gel time equipment as described above. The results are shown in Table 7.

Table 7

| Example | time of adding butanedione | $T_{25->35°C}$ (min) | $T_{25->peak}$ (min) | peak Temp (°C) |
|---------|---------------------------|------|------|------|
| 7.1 | 5 min | 30,7 | 38,2 | 187 |
| 7.2 | 8 hours | 32,2 | 40,0 | 180 |
| 7.3 | 24 hours | 33,3 | 41,2 | 177 |

Example 8

For demonstrating the mechanical properties of cured objects (according to the invention) as compared to mechanical properties of cured objects (according to the state of art), resin formulations were prepared from Atlac 430, a methacrylate type of resin, commercially available from DSM Composite Resins, Schaffhausen, Switzerland. In each case 500 g of resin (containing 50 g of styrene) was mixed with an amount of accelerator as indicated in table 8.1 (wt. % being indicated either as wt.% of metal, added in the form of its salt, or of dioxo-compound, or of dioxo-compound combined with potassium octanoate). Then, after stirring for about 5 min, peroxide was added and the curing was monitored by means of standard gel time equipment as described above. The results are shown in Table 8.1.

Table 8.1

| Example or Comparative Example | accelerator added (in wt.%) | peroxide (in wt.%) | $T_{25->35°C}$ (min) | $T_{25->peak}$ (min) | peak Temp (°C) |
|---------|---------------------------|------|------|------|------|
| Atlac 430 | | | | | |
| E.1 | Co (0,005%) = 0,9 mmol Co/kg resin | Butanox M50 (1%) | 36 | 53 | 120 |
| 8.1 | 2,3-hex (0,5%) | Butanox M50 (1%) | 62 | 84 | 118 |
| 8.2 | 2,3-hex (1%) | Butanox M50 (1%) | 21 | 29 | 151 |
| 8.3 | 3,4-hex (1%) | Butanox M50 (1%) | 29 | 38 | 149 |

In this table 8.1 the abbreviation 2,3-hex (resp. 3,4-hex) means 2,3-hexanedione (resp. 3,4-hexanedione).

In addition to the monitoring of curing properties, also cured objects (castings) were prepared by subjecting the resins to a postcure treatment of 24 hours at 60 °C, followed by 24 hours of postcure at 80 °C, before mechanical properties of the cured objects were determined according to ISO 527-2; HDT values were measured, according to ISO 75-Ae; Barcol hardness was measured according to DIN EN 59. The results are shown in Table 8.2 (under the same numbers of Examples and Comparative Examples). In addition, the Atlac 430 castings were subjected to a further postcure of 24 hours, this time at 120 °C, before HDT values were measured. The results are shown in table 8.2.

Table 8.2

| Example or Comparative Example | Mechanical properties of cured objects | | | | |
|---|---|---|---|---|---|
| | Tensile strength (MPa) | E-modulus (GPa) | Elongation at break (%) | HDT (in °C) | Barcol hardness |
| Atlac 430 | | | | | |
| E.1 | 89 | 3,3 | 5,7 | 99 | 39 |
| 8.1 | 82 | 3,3 | 7,5 | 92 | 30 |
| 8.2 | 80 | 3,2 | 4,4 | 95 | 34 |
| 8.3 | 87 | 3,3 | 5,5 | 100 | 38 |

It can be seen from the results of these experiments that the (pre)-accelerated resin compositions according to the invention (i.e. those containing the dioxo-component) result upon curing in materials having mechanical properties comparable to such articles as are made by means of cobalt pre-accelerated resin compositions.

Moreover, in none of the Examples presented here, foaming problems occurred during the preparation of the castings. Foaming problems, however, are frequently observed in curing of resins that are pre-accelerated with cobalt.

**Claims**

1.   Unsaturated polyester resin or vinyl ester resin composition

   a) comprising - while being cured - a polymer containing reactive unsaturations, optionally a reactive diluent; and a dioxo-component; and
   b) being curable with a peroxide component;
   **characterized in that** the resin composition
   c) the resin composition is essentially free of cobalt; and
   d) the dioxo-component consists of one or more dioxo-compounds having a calculated reduction energy (CRE), being the energy difference in kcal/mole between the lowest energy conformations of the radical anion and the corresponding neutral molecule as calculated by means of the Turbomole Version 5 program, in the range of from -5 to -30 kcal/mole.

2.   Resin composition according to claim 1, wherein
   the dioxo-component comprises at least one vicinal dioxo-compound having a CRE in the range of from -5 to -30 kcal/mole.

3.   Resin composition according to claim 1 or 2, wherein
   the one or more vicinal dioxo-compounds each have a CRE between -10 and -20 kcal/mole.

4.   Resin composition according to any of claims 1-3, wherein
   the one or more vicinal dioxo-compounds each have a CRE) between -13 and -17 kcal/mole.

5.   Resin composition according to any of claims 1-4, wherein
   at least one of the oxo-groups in the one or more vicinal dioxo-compounds is a ketone group.

6.   Resin composition according to claim 5, wherein
   at least one of the vicinal dioxo-compounds is a diketone.

7.   Resin composition according to claims 5 or 6, wherein
   at least one of the ketone groups is a methyl ketone.

8.   Resin composition according to any of claims 1-7, wherein
   the amount of the one or more vicinal dioxo-compounds is between 0,001 and 10 % by weight, calculated on the total weight of the basic resin system of the resin composition, which total weight is determined excluding fillers and the like.

9. Resin composition according to claim 8, wherein
said amount of vicinal dioxo-compounds is between 0,01 and 5 % by weight.

10. Resin composition according to claim 9, wherein
said amount of vicinal dioxo-compounds is amount between 0,1 and 3 % by weight.

11. Resin composition according to any of claims 1-10, wherein
the resin composition has an acid value in the range of from 0-300 mg KOH/g of resin and wherein the molecular weight of the polymer containing reactive unsaturations is in the range of from 500 to 200.000 g/mole.

12. Resin composition according to claim 11, wherein
the molecular weight of the polymer containing reactive unsaturations is in the range of from 750 to 75.000 g/mole.

13. Resin composition according to claim 12, wherein
the molecular weight of the polymer containing reactive unsaturations is in the range of from 1.000 to 10.000 g/mole.

14. Resin composition according to any of claims 1-13, wherein
the resin composition also contains one or more reactive diluents.

15. Resin composition according to claim 14, wherein
the reactive diluent is a methacrylate and/or styrene.

16. Resin composition according to any of claims 1-15, wherein
the resin composition also is containing one or more inhibitors.

17. Resin composition according to claim 16, wherein
the inhibitor or inhibitors are selected from the groups of phenolic and/or N-oxyl based inhibitors.

18. Resin composition according to any of claims 16 or 17, wherein
the amount of inhibitor in the resin composition is in the range of from 0,0001 to 10 % by weight, calculated on the total weight of the basic resin system of the resin composition, which total weight is determined excluding fillers and the like.

19. Resin composition according to any of claims 16-18, wherein
the amount of inhibitor in the resin composition is in the range of from 0,001 to 1 % by weight.

20. Resin composition according to any of claims 1-19, wherein
the resin composition is curable with a liquid or dissolved peroxide component.

21. Resin composition according to claim 20, wherein
the peroxide component is a liquid or dissolved hydroperoxide.

22. Cured objects obtained from a resin composition according to any of claims 1-21 by curing with a peroxide.

23. Method for curing, in the presence of a dioxo-component, of unsaturated polyester resin or vinyl ester resin compositions

a) comprising a polymer containing reactive unsaturations, optionally a reactive diluent; and
b) being curable with a peroxide component;
**characterized in that**
c) the resin composition is essentially free of cobalt; and
d) the dioxo-component is added to the resin composition before or after the addition of the peroxide component, and the dioxo-component consists of one or more dioxo-compounds having a calculated reduction energy (CRE), being the energy difference in kcal/mole between the lowest energy conformations of the radical anion and the corresponding neutral molecule as calculated by means of the Turbomole Version 5 program, in the range of from -5 to -30 kcal/mole.

**24.** Method for curing, according to claim 23, wherein
the dioxo-component is present in the resin composition before the peroxide is being added for curing.

**European Patent Office**

**EUROPEAN SEARCH REPORT**

Application Number

EP 05 07 5685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Section Ch, Week 200364<br>Derwent Publications Ltd., London, GB;<br>Class A21, AN 2003-673997<br>XP002329301<br>-& JP 2003 103701 A (DAINIPPON INK & CHEM INC) 9 April 2003 (2003-04-09)<br>* abstract * | 1-20 | C08K5/07<br>C08L67/06<br>C08L63/10<br>C08F290/06<br>C08F290/14<br>C08F283/01<br>C08F4/40 |
| D,A | COOK W D ET AL: "CONTROL OF GEL TIME AND EXOTHERM BEHAVIOUR DURING CURE OF UNSATURATED POLYESTER RESINS"<br>POLYMER INTERNATIONAL, BARKING, GB,<br>vol. 50, no. 1, 2001, pages 129-134,<br>XP009040866<br>* the whole document * | 1-20 | |
| D,X | US 3 584 076 A (EDWARD CHETAKIAN)<br>8 June 1971 (1971-06-08)<br>* examples * | 1-20 | |
| X | DATABASE WPI<br>Section Ch, Week 198403<br>Derwent Publications Ltd., London, GB;<br>Class A21, AN 1984-014958<br>XP002329302<br>-& JP 58 208315 A (MITSUBISHI GAS CHEM CO INC) 5 December 1983 (1983-12-05)<br>* abstract * | 1-20 | TECHNICAL FIELDS SEARCHED (IPC)<br><br>C08K<br>C08L<br>C08F |
| X | US 5 262 212 A (WATERS ET AL)<br>16 November 1993 (1993-11-16)<br>* column 4, line 41 - line 48 *<br>* column 8, line 7 - line 31; claims 7,21; examples * | 1-20 | |

-/--

The present search report has been drawn up for all claims

| Place of search | Date of completion of the search | Examiner |
|---|---|---|
| Munich | 13 March 2006 | Masson, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 07 5685

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 507 432 A (BANNO ET AL) 26 March 1985 (1985-03-26) * column 2, line 60 - line 61 * * claim 9 * | 1-20 | |
| A | EP 1 441 003 A (ARKEMA INC) 28 July 2004 (2004-07-28) * page 3, line 41 - line 58 * | 1-20 | |
| A | US 4 085 160 A (ANDERSON ET AL) 18 April 1978 (1978-04-18) * column 1, line 23 - line 63; examples * | 1-20 | |
| A | EP 0 761 737 A (NIPPON SHOKUBAI CO., LTD) 12 March 1997 (1997-03-12) * page 3, line 30 - page 5, line 10 * | 1-20 | |
| A | US 4 267 279 A (HOWELL ET AL) 12 May 1981 (1981-05-12) * the whole document * | 1-20 | |
| A | DE 12 47 660 B (DEUTSCHE GOLD- UND SILBER-SCHEIDEANSTALT VORMALS ROESSLER) 17 August 1967 (1967-08-17) * the whole document * | 1-20 | TECHNICAL FIELDS SEARCHED (IPC) |
| X | EP 0 030 050 A (SYNRES INTERNATIONAAL B.V) 10 June 1981 (1981-06-10) * page 1, line 16 - line 25 * * page 2, line 16 - line 24 * * page 3, line 29 - line 33 * * claims; examples * | 1-20 | |
| X | EP 1 403 298 A (RESOLUTION RESEARCH NEDERLAND B.V) 31 March 2004 (2004-03-31) * page 3, line 13 - line 42 * * claims; examples * | 1-20 | |

-/--

The present search report has been drawn up for all claims

| Place of search | Date of completion of the search | Examiner |
|---|---|---|
| Munich | 13 March 2006 | Masson, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 705 214 A1**

| European Patent Office | EUROPEAN SEARCH REPORT | Application Number EP 05 07 5685 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Section Ch, Week 197723<br>Derwent Publications Ltd., London, GB;<br>Class A23, AN 1977-40550Y<br>XP002329985<br>-& JP 52 051489 A (NIPPON GAKKI KK)<br>25 April 1977 (1977-04-25)<br>* abstract *<br>----- | 1-20 | |
| | | | TECHNICAL FIELDS SEARCHED (IPC) |

The present search report has been drawn up for all claims

| Place of search | Date of completion of the search | Examiner |
|---|---|---|
| Munich | 13 March 2006 | Masson, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 07 5685

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2006

| Patent document cited in search report | | Publication date | Patent family member(s) | | Publication date |
|---|---|---|---|---|---|
| JP 2003103701 | A | 09-04-2003 | JP 3415610 B2 | | 09-06-2003 |
| US 3584076 | A | 08-06-1971 | NONE | | |
| JP 58208315 | A | 05-12-1983 | JP 1050328 B | | 30-10-1989 |
| | | | JP 1565271 C | | 25-06-1990 |
| US 5262212 | A | 16-11-1993 | NONE | | |
| US 4507432 | A | 26-03-1985 | DE 3339499 A1 | | 03-05-1984 |
| | | | FR 2535329 A1 | | 04-05-1984 |
| | | | GB 2131818 A | | 27-06-1984 |
| | | | JP 1499158 C | | 29-05-1989 |
| | | | JP 59081322 A | | 11-05-1984 |
| | | | JP 63046765 B | | 19-09-1988 |
| EP 1441003 | A | 28-07-2004 | CA 2454715 A1 | | 22-07-2004 |
| | | | CN 1517405 A | | 04-08-2004 |
| | | | JP 2004225045 A | | 12-08-2004 |
| | | | MX PA04000668 A | | 12-11-2004 |
| | | | US 2004143051 A1 | | 22-07-2004 |
| US 4085160 | A | 18-04-1978 | AU 1280976 A | | 13-10-1977 |
| | | | CA 1085545 A1 | | 09-09-1980 |
| | | | DE 2619380 A1 | | 11-11-1976 |
| | | | JP 51134782 A | | 22-11-1976 |
| EP 0761737 | A | 12-03-1997 | JP 3017446 B2 | | 06-03-2000 |
| | | | JP 9111108 A | | 28-04-1997 |
| | | | KR 198863 B1 | | 15-06-1999 |
| | | | TW 425415 B | | 11-03-2001 |
| | | | US 5770653 A | | 23-06-1998 |
| US 4267279 | A | 12-05-1981 | CA 1143884 A1 | | 29-03-1983 |
| | | | IT 1128550 B | | 28-05-1986 |
| | | | JP 1303516 C | | 28-02-1986 |
| | | | JP 56020012 A | | 25-02-1981 |
| | | | JP 60028316 B | | 04-07-1985 |
| | | | US 4325841 A | | 20-04-1982 |
| DE 1247660 | B | 17-08-1967 | NONE | | |
| EP 0030050 | A | 10-06-1981 | DE 3067030 D1 | | 19-04-1984 |
| | | | ES 8204748 A1 | | 16-08-1982 |
| | | | NL 7908410 A | | 16-06-1981 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 05 07 5685

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2006

| Patent document cited in search report | | Publication date | Patent family member(s) | Publication date |
|---|---|---|---|---|
| EP 1403298 | A | 31-03-2004 | NONE | |
| JP 52051489 | A | 25-04-1977 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3584076 A

- US 20020091214 A1

### Non-patent literature cited in the description

- **W. D. COOK et al.** *Polym. Int.,* 2001, vol. 50, 129-134
- Reinforced Plastics/Composites Division. **KOLC-ZYNSKI et al.** proceedings of the 24th Annual Technical Conference SPI. Society of the Plastics Industry, Inc, 1969, 1-8
- **M. MALIK et al.** *J.M.S. - Rev. Macromol. Chem. Phys.,* 2000, vol. C40 (2&3), 139-165
- **M. BELFORD et al.** *Fire Retardant Chemicals Association Spring Conference,* 10 March 2002

- **A. BECKE.** *Phys. Rev.,* 1988, vol. 38, 3098-3100
- **J. PERDEW.** *Phys. Rev. B,* 1986, vol. 33, 8822-3824
- **A. SCHÄFER et al.** *J. Chem. Phys.,* 1992, vol. 97, 2571-2577
- **K. EICHKORN et al.** *Theor. Chem. Acc.,* 1997, vol. 97, 119-124